# EUROPEAN PATENT SPECIFICATION

(11) **EP 3 072 705 B1**
(45) Date of publication and mention of the grant of the patent: **30.10.2019**
(21) Application number: 16151149.8
(22) Date of filing: 13.01.2016
(51) Int. Cl.: B44C 1/17, H04M 1/02, B05D 1/02, H01Q 1/24

(54) **DEVICE SHELL AND PROCESSING METHOD**
GEHÄUSE UND VERARBEITUNGSVERFAHREN
ENVELOPPE ET PROCÉDÉ DE TRAITEMENT

(30) Priority: 23.03.2015 CN 201510128804
(43) Date of publication of application: 28.09.2016
(73) Proprietor: Xiaomi Inc., Beijing 100085 (CN)
(72) Inventor: SHANG, Xiaodong, Haidian District Beijing 100085 (CN); ZHANG, Shuo, Haidian District Beijing 100085 (CN); LI, Zhuxin, Haidian District Beijing 100085 (CN); WANG, Guohua, Haidian District Beijing 100085 (CN)
(74) Representative: Reeve, Nicholas Edward

(56) References cited:
- WO-A1-02/18149
- AT-B- 412 774
- DE-A1- 2 361 665
- US-A1- 2013 314 470

## Description

### TECHNICAL FIELD

The present disclosure relates to the field of shell manufacture technology, and more particularly to a device shell and a method for processing the same, as well as a device.

### BACKGROUND

WO 02/18149 A1 discloses a method of processing a device shell that comprises an antenna, the method comprising providing a device shell comprising an antenna; applying an ink layer onto a film layer to form a membrane; placing the membrane onto at least part of the outer surface of the device shell; and removing the film layer from the membrane, so that said outer surface is adhered with the ink layer.

Recently, some devices (such as mobile phones and tablet computers) with a function of communicating over a network need to be installed with an antenna inside the device shell. Some venders may use a metal material to manufacture the device shell to pursue aesthetics of appearance of the device shell, so as to satisfy users' requirements with respect to the appearance of the device shell. However, for the antenna technology, a metal frame needs to be divided, by means of an insulating material, into several independent parts to obtain the desired radio frequency characteristics. Therefore, the entire metal shell of the device needs to be provided with additional insulating material (generally a plastic material, for example a partition) outside the shell, by which it may meet the required radio frequency characteristics, but while not adversely affecting the uniform appearance and aesthetics of the device shell severely.

### SUMMARY OF THE INVENTION

The present disclosure provides a device shell and a method for processing the same, as well as a device, so that the device shell may be of a uniform appearance as a whole.

According to a first aspect of embodiments of the present disclosure, there is provided a method of processing a device shell that comprises an antenna in accordance with claim 1.

In an embodiment, adhering the membrane to an outer surface of the shell includes: spraying glue onto the outer surface; and attaching the membrane to the outer surface sprayed with glue, wherein the ink layer of the membrane is in contact with the outer surface.

In an embodiment, removing the film layer from the membrane adhered to the outer surface includes: cutting the membrane adhered to the outer surface into a predetermined shape; and removing the film layer from the membrane adhered to the outer surface and being of the predetermined shape, so that the outer surface is adhered with the ink layer being of the predetermined shape.

In an embodiment, subsequent to removing the film layer from the membrane adhered to the outer surface, the method further includes: reinforcing the ink layer adhered to the outer surface, so that an adhesive force between the ink layer and the outer surface is equal to or greater than a predetermined threshold.

In an embodiment, prior to adhering the membrane to the outer surface of the shell, the method further includes: subjecting the outer surface to at least one of chamfering treatment and polishing treatment.

In an embodiment, the ink layer is of a thickness ranging from 0.002 mm to 0.2 mm.

In an embodiment, the glue is of a thickness ranging from 0.002 mm to 0.2 mm.

According to the invention, the ink layer includes a metal ink layer.

According to a second aspect of embodiments of the present disclosure, there is provided a device shell in accordance with claim 9.

In an embodiment, the ink layer is of a thickness ranging from 0.002 mm to 0.2 mm.

The ink layer includes a metal ink layer.

According to a third aspect of embodiments of the present disclosure, there is provided a device, including such device shell.

According to embodiments of the present disclosure, the following beneficial effects are achieved.

With the method according to embodiments of the present disclosure, the outer surface of the device shell may be adhered with the ink layer as requires, allowing the outer surface of the device shell to display a uniform appearance as a whole, regardless of the material or the shape of the device shell, and thereby satisfying various requirements in textures and materials, as well as improving the aesthetics.

It is to be understood that both the foregoing general description and the following detailed description are exemplary and explanatory only and are not restrictive of the invention which is defined by the claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for processing a device shell illustrative of the present disclosure;
Fig. 2 is a schematic view showing a cross section of a device shell after performing step S101;
Fig. 3 is a schematic view showing a cross section of a device shell after performing step S102;
Fig. 4 is a flow chart showing a method for processing a device shell further illustrative of the present disclosure;
Fig. 5 is a schematic view showing a cross section of a device shell processed by the method according to an illustrative embodiment of the present disclosure;
Fig. 6 is a schematic view showing a cross section view of a device shell processed by the method according to another illustrative embodiment of the present disclosure; and
Fig. 7 is a block diagram of a device according to an illustrative embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

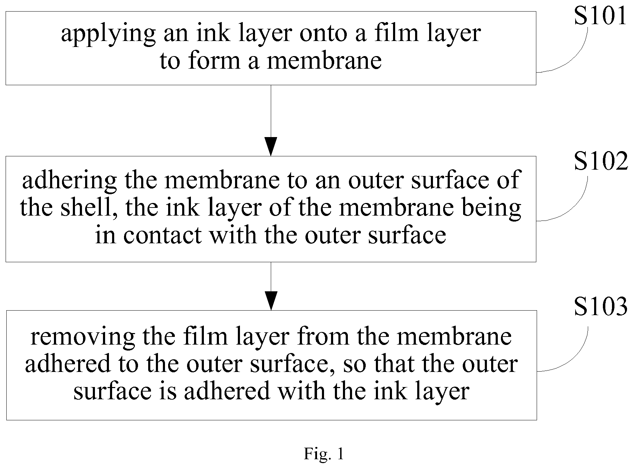

Fig. 1 is a flow chart showing a method for processing a device shell. As shown in Fig. 1, the method is used for manufacturing a device shell, including the following steps S101 to S103.

In step S101, an ink layer is applied onto a film layer to form a membrane.

In an embodiment, the ink is stirred sufficiently in advance, so that the ink may be of a uniform density; then an ink layer is applied onto a film layer to form a membrane.

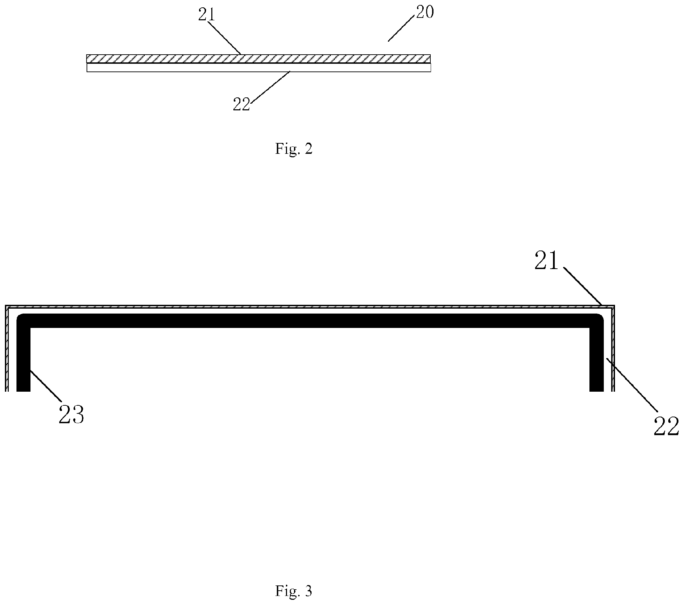

In an embodiment, the ink layer is of a thickness ranging from 0.002 mm to 0.2 mm. Fig. 2 is a schematic view showing a cross section of the membrane, in which 21 represents the film layer, 22 represents the ink layer and the 20 represents the membrane.

In step S102, the membrane is adhered to an outer surface of the shell, in which the ink layer of the membrane is in contact with the outer surface.

Fig. 3 is a schematic view showing a cross section of a shell after performing step S102, in which 23 represents the shell.

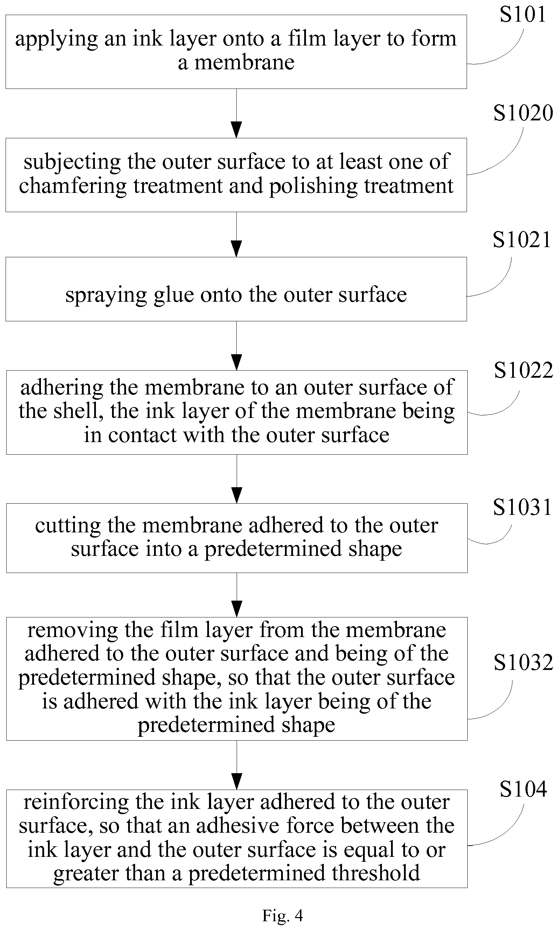

In an embodiment, as shown in Fig. 4, step S102 may be performed as the following steps S1021 to S1022. In step S1021, glue is sprayed onto the outer surface. In step S1022, the membrane is attached to the outer surface sprayed with the glue, in which the ink layer of the membrane is in contact with the outer surface. In an embodiment, the glue is of a thickness ranging from 0.002 mm to 0.2 mm. In practical operation, the membrane may be attached to the shell in a special mould, and the membrane may be conveyed and aligned to the shell sprayed with the glue precisely by a film feeding machine and a positioner, respectively, thereby attaching the membrane to the shell sprayed with the glue. In the present embodiment, the membrane may be adhered to the outer surface of the shell in an adhesive way or by other ways, all of which fall into the scope of embodiments of the present disclosure.

In an embodiment, as shown in Fig. 4, prior to step S102 the method may further include step S1020: subjecting the outer surface to at least one of chamfering treatment and polishing treatment. The chamfering treatment and the treatment polishing treatment are both beneficial to attach the membrane to the outer surface of the shell.

In step S103, the film layer is removed from the membrane adhered to the outer surface, so that the outer surface is adhered with the ink layer.

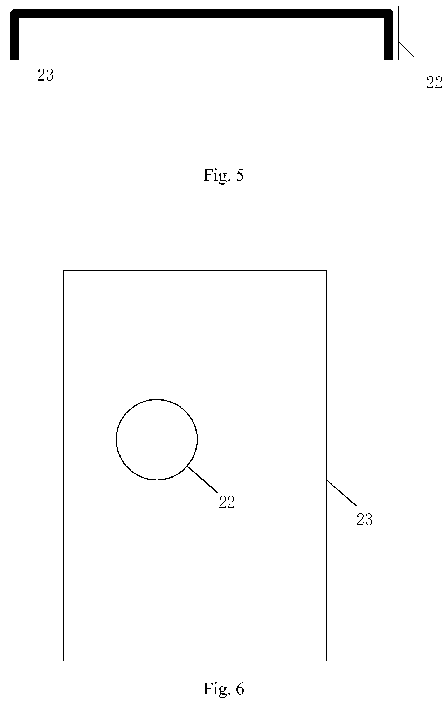

In an embodiment, as shown in Fig. 4, step S103 may be performed as steps S1031 to S1032. In step S1031, the membrane adhered to the outer surface is cut into a predetermined shape. In step S1032, the film layer is removed from the membrane adhered to the outer surface and being of the predetermined shape, so that the outer surface is adhered with the ink layer being of the predetermined shape. The predetermined shape may be designed into any shape as required. For example, the predetermined shape may be identical to that of the outer surface, so that the ink layer may fully cover the outer surface of the shell, as shown in Fig. 5. Fig. 5 is a schematic view showing a cross section of a device shell, in which 22 represents the ink layer and 23 represents the shell. For another example, the predetermined shape may be smaller than that of the shell, so that the ink layer covers a portion of the outer surface, as shown in Fig. 6. Fig. 6 is a schematic view showing a cross section view of a device shell, in which the ink layer 22 is of a circle shape coving a region corresponding to the circle shape of the outer surface of the shell.

In an embodiment, as shown in Fig. 4, step S104 may be performed subsequent to step S103, that is reinforcing the ink layer adhered to the outer surface, so that an adhesive force between the ink layer and the outer surface is equal to or greater than a predetermined threshold, thereby achieving adhesive force requirements and avoiding the ink layer from being desquamated easily from the outer shell. For example, the reinforcement treatment may be carried out by curing processes such as cooling and secondary heating.

The device shell according to the invention is made of a metal material and a plastic material. The shell may be of any shape, and is provided with other components such as the partition. The ink layer according to the present disclosure is a metal ink layer. The metal ink refers to an ink formulated with fine metal films, instead of a pigment or a dye in a traditional ink, allowing for a special metal-shining effect. As a result, the metal ink layer may enable the device shell to be metallic as a whole or in a certain region.

With the method according to embodiments of the present disclosure, the outer surface of the device shell may be adhered with the ink layer as required, allowing the outer surface of the device shell to display a uniform appearance as a whole, regardless of the material or the shape of the device shell, and thereby satisfying various requirements in textures and materials, as well as improving the aesthetics.

The ink layer is the metal ink layer, allowing the device shell to be of a metallic appearance as a whole or with a predetermined region, and thereby improving the aesthetics. In particular, for a device with a metal shell and an antenna, in order to ensure the antenna's radio frequency characteristics, it is necessary to divide the metal shell into several portions with an insulating material, i.e. the partition. As a result, the device shell is not able to display a metallic texture as a whole. However, the method for processing a device shell according to embodiments of the present disclosure not only meets the requirements for radio frequency characteristics of the antenna, but also allows the device shell to display the metallic texture as a whole, avoiding the partition from being observed from outside, and thereby improving the aesthetics.

The present disclosure further provides embodiments in which a device shell is processed by the above methods. An outer surface of the shell is adhered with an ink layer, as shown in Figs. 5 and 6.

In an embodiment, the ink layer is of a thickness ranging from 0.002 mm to 0.2 mm.

The ink layer according to the present disclosure is a metal ink layer. The metal ink layer may enable the device shell to be metallic as a whole or in a certain region.

The present disclosure further provides embodiments of a device including the device shell provided by embodiments of the present disclosure.

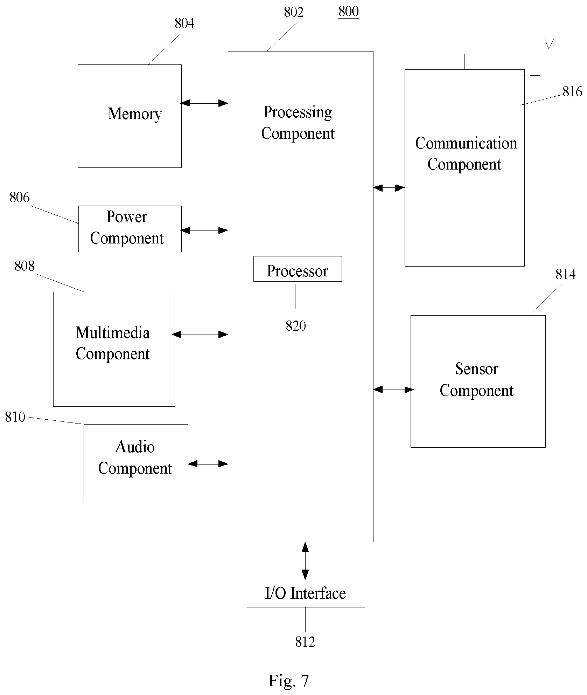

Fig. 7 is a block diagram of a device 800 according to an illustrative embodiment. For example, the device 800 may be a mobile phone, a computer, a digital broadcasting terminal, a messaging device, a game console, a tablet device, fitness equipment, a Personal Digital Assistant PDA, etc.

Referring to Fig. 7, the device 800 may include the following one or more components: a processing component 802, a memory 804, a power component 806, a multimedia component 808, an audio component 810, an Input/Output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 808 includes a front camera and/or a rear camera. The front camera and the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the intelligent device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface for the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800 and relative positioning of components (e.g. the display and the keypad of the device 800). The sensor component 814 may also detect a change in position of the device 800 or of a component in the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as WIFI, 2G, or 3G, or a combination thereof. In one illustrative embodiment, the communication component 816 receives a broadcast signal or broadcast associated information from an external broadcast management system via a broadcast channel. In one illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer readable storage medium including instructions, such as the memory 804 including instructions. The above instructions are executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

It will be appreciated that the present invention is not limited to the exact construction that has been described above and illustrated in the accompanying drawings, and that various modifications and changes can be made without departing form the scope thereof. It is intended that the scope of the invention only be limited by the appended claims.

## Claims

1. A method of processing a device shell that comprises an antenna, comprising:
providing a device shell formed of metal material and plastic material and comprising an antenna and a partition of insulating material, wherein the partition forms at least part of the outer surface of the device shell;
applying (S101) a metal ink layer (22) onto a film layer (21) to form a membrane (20);
adhering (S102) the membrane (20) to at least the part of the outer surface of the device shell (23) formed by the partition, the metal ink layer (22) of the membrane (20) being in contact with said outer surface; and
removing (S103) the film layer (21) from the membrane (20) adhered to the outer surface, so that said outer surface is adhered with the metal ink layer (22).

2. The method according to claim 1, wherein adhering (S101) the membrane (20) to at least the part of the outer surface of the device shell (23) formed by the partition comprises:
spraying (S1021) glue onto the outer surface; and
attaching (S1022) the membrane (20) to the outer surface sprayed with glue,
wherein the metal ink layer (22) of the membrane is in contact with the outer surface.

3. The method according to claim 1 or 2, wherein removing the film layer (21) from the membrane (20) adhered to the outer surface comprises:
cutting (S1031) the membrane adhered to the outer surface into a predetermined shape; and
removing (S1032) the film layer from the membrane adhered to the outer surface and being of the predetermined shape, so that the outer surface is adhered with the metal ink layer being of the predetermined shape.

4. The method according to any one of claims 1 to 3, wherein subsequent to removing (S1032) the film layer (21) from the membrane (20) adhered to the outer surface, the method further comprises:
reinforcing (S104) the metal ink layer adhered to the outer surface, so that an adhesive force between the metal ink layer and the outer surface is equal to or greater than a predetermined threshold.

5. The method according to any one of claims 1 to 4, wherein prior to adhering (S102) the membrane (20) to the outer surface of the shell (23), the method further comprises:
subjecting (S1020) the outer surface to at least one of chamfering treatment and polishing treatment.

6. The method according to any one of claims 1 to 5, wherein the metal ink layer (22) is of a thickness ranging from 0.002 mm to 0.2 mm.

7. The method according to any one of claims 2 to 6, wherein the glue is of a thickness ranging from 0.002 mm to 0.2 mm.

8. The method according to any one of claims 1 to 7, wherein adhering (S101) the membrane (20) to at least the part of the outer surface of the device shell (23) formed by the partition comprises:
adhering (S101) the membrane (20) to at least the entire outer surface of the device shell (23), so that the metal ink layer may fully cover the outer surface of the shell.

9. A device shell (23) obtainable by the method according to any one of claims 1 to 8, wherein at least the part of the outer surface of the shell formed by the partition is adhered with the metal ink layer (22).

10. The device shell (23) according to claim 9, wherein the metal ink layer (22) is of a thickness ranging from 0.002 mm to 0.2 mm.

11. The device shell (23) according to claim 9 or 10, wherein the entire outer surface of the device shell (23) is adhered with the metal ink layer (22).

12. A device (800), comprising the device shell (23) according to any one of claims 9 to 11.

## Patentansprüche

1. Verfahren zum Verarbeiten eines Gerätegehäuses, das eine Antenne umfasst, das Folgendes beinhaltet:
Bereitstellen eines Gerätegehäuses, das aus einem Metallmaterial und einem Plastikmaterial gebildet ist und eine Antenne und eine Abtrennung aus Isoliermaterial beinhaltet, wobei die Abtrennung wenigstens Teil der Außenfläche des Gerätegehäuses bildet;
Aufbringen (S101) einer Metallfarbschicht (22) auf eine Filmschicht (21) zum Bilden einer Membran (20);
Kleben (S102) der Membran (20) auf wenigstens den Teil der Außenfläche des durch die Abtrennung gebildeten Gerätegehäuses (23), wobei die Metallfarbschicht (22) der Membran (20) mit der genannten Außenfläche in Kontakt ist; und
Entfernen (S103) der Filmschicht (21) von der auf der Außenfläche klebenden Membran (20), so dass die genannte Außenfläche mit der Metallfarbschicht (22) verklebt wird.

2. Verfahren nach Anspruch 1, wobei das Kleben (S101) der Membran (20) auf wenigstens den Teil der Außenfläche des durch die Abtrennung gebildeten Gerätegehäuses (23) Folgendes beinhaltet:
Sprühen (S1021) von Klebstoff auf die Außenfläche; und
Befestigen (S1022) der Membran (20) an der mit Klebstoff besprühten Außenfläche,
wobei die Metallfarbschicht (22) der Membran mit der Außenfläche in Kontakt ist.

3. Verfahren nach Anspruch 1 oder 2, wobei das Entfernen der Filmschicht (21) von der an der Außenfläche haftenden Membran (20) Folgendes beinhaltet:
Zuschneiden (S1031) der mit der Außenfläche verklebten Membran zu einer vorbestimmten Form; und
Entfernen (S1032) der Filmschicht von der mit der Außenfläche verklebten Membran, die die vorbestimmte Form hat, so dass die Außenfläche mit der Metallfarbschicht mit der vorbestimmten Form verklebt wird.

4. Verfahren nach einem der Ansprüche 1 bis 3, wobei das Verfahren nach dem Entfernen (S1032) der Filmschicht (21) von der mit der Außenfläche verklebten Membran (20) ferner Folgendes beinhaltet:
Verstärken (S104) der mit der Außenfläche verklebten Metallfarbschicht, so dass eine Haftkraft zwischen der Metallfarbschicht und der Außenfläche genauso groß wie oder größer als eine vorbestimmte Schwelle ist.

5. Verfahren nach einem der Ansprüche 1 bis 4, wobei das Verfahren vor dem Kleben (S102) der Membran (20) auf die Außenfläche des Gehäuses (23) ferner Folgendes beinhaltet:
Unterziehen (S1020) der Außenfläche wenigstens einer Anfasbehandlung und einer Polierbehandlung.

6. Verfahren nach einem der Ansprüche 1 bis 5, wobei die Metallfarbschicht (22) eine Dicke im Bereich von 0,002 mm bis 0,2 mm hat.

7. Verfahren nach einem der Ansprüche 2 bis 6, wobei der Klebstoff eine Dicke im Bereich von 0,002 mm bis 0,2 mm hat.

8. Verfahren nach einem der Ansprüche 1 bis 7, wobei das Verkleben (S101) der Membran (20) mit wenigstens dem Teil der Außenfläche des Gerätegehäuses (23), der durch die Abtrennung gebildet wird, Folgendes beinhaltet:
Kleben (S101) der Membran (20) auf wenigstens die gesamte Außenfläche des Gerätegehäuses (23), so dass die Metallfarbschicht die Außenfläche des Gehäuses vollständig bedecken kann.

9. Gerätegehäuse (23), das mit dem Verfahren nach einem der Ansprüche 1 bis 8 erhalten werden kann, wobei wenigstens der durch die Abtrennung gebildete Teil der Außenfläche des Gehäuses mit der Metallfarbschicht (22) verklebt wird.

10. Gerätegehäuse (23) nach Anspruch 9, wobei die Metallfarbschicht (22) einen Dickenbereich von 0,002 mm bis 0,2 mm hat.

11. Gerätegehäuse (23) nach Anspruch 9 oder 10, wobei die gesamte Außenfläche des Gerätegehäuses (23) mit der Metallfarbschicht (22) verklebt ist.

12. Gerät (800), das das Gerätegehäuse (23) nach einem der Ansprüche 9 bis 11 umfasst.

## Revendications

1. Procédé de traitement d'une coque de dispositif qui comprend une antenne, comprenant :
la fourniture d'une coque de dispositif formée d'un matériau métallique et d'un matériau plastique et comprenant une antenne et une séparation de matériau isolant, dans lequel la séparation fait au moins partie de la surface externe de la coque de dispositif ;
l'application (S101) d'une couche d'encre métallique (22) sur une couche pelliculaire (21) pour former une membrane (20) ;
le collage (S102) de la membrane (20) sur au moins la partie de la surface externe de la coque de dispositif (23) formée par la séparation, la couche d'encre métallique (22) de la membrane (20) étant en contact avec ladite surface externe ; et
le retrait (S103) de la couche pelliculaire (21) de la membrane (20) collée sur la surface externe, de telle sorte que ladite surface externe soit collée avec la couche d'encre métallique (22).

2. Procédé selon la revendication 1, dans lequel le collage (S101) de la membrane (20) sur au moins la partie de la surface externe de la coque de dispositif (23) formée par la séparation comprend :
la vaporisation (S1021) de colle sur la surface externe ; et
la fixation (S 1022) de la membrane (20) sur la surface externe revêtue de colle vaporisée,
dans lequel la couche d'encre métallique (22) de la membrane est en contact avec la surface externe.

3. Procédé selon la revendication 1 ou 2, dans lequel le retrait de la couche pelliculaire (21) de la membrane (20) collée sur la surface externe comprend :
la découpe (S1031) de la membrane collée sur la surface externe dans une forme prédéterminée ; et
le retrait (S32) de la couche pelliculaire de la membrane collée sur la surface externe et ayant la forme prédéterminée, de telle sorte que la surface externe soit collée avec la couche d'encre métallique de la forme prédéterminée.

4. Procédé selon l'une quelconque des revendications 1 à 3, le procédé comprenant en outre après le retrait (S103) de la couche de film (21) de la membrane (20) collée sur la surface externe
le renforcement (S104) de la couche d'encre métallique collée sur la surface externe, de telle sorte qu'une force adhésive entre la couche d'encre métallique et la surface externe soit égale ou supérieure à un seuil prédéterminé.

5. Procédé selon l'une quelconque des revendications 1 à 4, le procédé comprenant en outre avant le collage (S102) de la membrane (20) sur la surface externe de la coque (23) :
l'application (S 1020) d'au moins un d'un traitement de chanfreinage et d'un traitement de polissage sur la surface externe.

6. Procédé selon l'une quelconque des revendications 1 à 5, dans lequel la couche d'encre métallique (22) a une épaisseur de 0,002 mm à 0,2 mm.

7. Procédé selon l'une quelconque des revendications 2 à 6, dans lequel la colle a une épaisseur de 0,02 mm à 0,2 mm.

8. Procédé selon l'une quelconque des revendications 1 à 7, dans lequel le collage (S101) de la membrane (20) sur au moins la partie de la surface externe de la coque de dispositif (23) formée par la séparation comprend :
le collage (S101) de la membrane (20) sur au moins toute la surface externe de la coque de dispositif (23), de telle sorte que la couche d'encre métallique puisse complètement recouvrir la surface externe de la coque..

9. Coque de dispositif (23) pouvant être obtenue par le procédé selon l'une quelconque des revendications 1 à 8, dans laquelle au moins la partie de la surface externe de la coque formée par la séparation est collée avec la couche d'encre métallique (22).

10. Coque de dispositif (23) selon la revendication 9, dans laquelle la couche d'encre métallique (22) a une épaisseur de 0,002 mm à 0,2 mm.

11. Coque de dispositif (23) selon la revendication 9 ou 10, dans laquelle toute la surface externe de la coque de dispositif (23) est collée avec la couche d'encre métallique (22).

12. Dispositif (800), comprenant la coque de dispositif (23) selon l'une quelconque des revendications 9 à 11.
